# EUROPEAN PATENT APPLICATION

(11) **EP 2 367 237 A1**
(43) Date of publication of application: **21.09.2011**
(21) Application number: 11001475.0
(22) Date of filing: 22.02.2011
(51) Int. Cl.: H01R 13/52, B60L 11/18, H01R 13/504, B29C 45/14, H01R 13/512, H01R 13/11

(54) **Charging connector and connecting method therefor**

(30) Priority: 18.03.2010 JP 2010062798
(71) Applicant: Sumitomo Wiring Systems, Ltd., Yokkaichi-city, Mie 510-8503 (JP)
(72) Inventor: Takada, Akinori, Yokkaichi-city Mie 510-8503 (JP)
(74) Representative: Schiuma, Daniele Wolfgang

(57) **Abstract**

An object of the present invention is to prevent a foreign matter from entering a cavity and prevent a front wall of the cavity from being damaged.

The present invention concerns a charging connector 10 connectable to a vehicle-side connector 50 provided in a vehicle. The charging connector 10 is provided with terminal fittings 20 to be electrically conductively connected to vehicle-side terminals 60 provided in the vehicle-side connector 50, and terminal accommodating portions 15 internally formed with cavities 17 for accommodating the terminal fittings 20. A front wall of each cavity 17 includes a resilient member 30 which allows the insertion of the vehicle-side terminal 60 into the cavity 17 while being held in close contact with the vehicle-side terminal 60 over the entire circumference.

## Description

The present invention relates to a charging connector connectable to a vehicle-side connector provided in a vehicle, and to a connecting method therefor.

A charging connector of this type is, for example, known from Japanese Unexamined Patent Publication No. H08-222314. This connector includes a terminal accommodating portion integrally formed with a cavity for accommodating a terminal fitting. The terminal fitting includes a cylindrical fitting portion into which a pin-shaped vehicle-side terminal provided in a vehicle-side connector is to be inserted, a circumferential groove is formed in the inner circumferential surface of this fitting portion, and an O-ring is mounted in this circumferential groove. With such a terminal fitting, even if a foreign matter such as muddy water deposits on a surface of the vehicle-side terminal, the O-ring can come into close contact with the vehicle-side terminal over the entire circumference to wipe off the foreign matter and prevent the foreign matter from entering the fitting portion.

Since such a charging connector assumes outdoor use, a muddy water test is conducted in which the charging connector is dried after being immersed in muddy water and then repeatedly connected to and separated from a vehicle-side connector. Thus, the charging connector is required to have durability for the muddy water test.

However, although the above charging connector can prevent a foreign matter from entering the fitting portion, it cannot prevent a foreign matter from entering between the fitting portion and the terminal accommodating portion, i.e. the cavity. Since a foreign matter is removed by the O-ring in the fitting portion accommodated in the cavity, the foreign matter wiped off by the O-ring remains in the cavity. As a result, foreign matters are accumulated in a large quantity in the cavity by repeatedly inserting and withdrawing the vehicle-side terminal.

Further, if the charging connector is dropped by mistake and a protruding object is present at a falling point, a front end portion of the terminal accommodating portion, i.e. a front wall of the cavity may be subject to an impact by colliding with the protruding object to receive an impact, thereby being damaged.

The present invention was developed in view of the above situation and an object thereof is to prevent a foreign matter from entering a cavity and prevent a front wall of the cavity from being damaged.

This object is solved according to the invention by the features of the independent claims. Preferred embodiments of the invention are subject of the dependent claims.

The present invention is directed to a charging connector connectable to a vehicle-side connector provided in a vehicle, comprising a terminal fitting to be electrically conductively connected to a vehicle-side terminal provided in the vehicle-side connector; and a terminal accommodating portion internally formed with a cavity for at least partly accommodating the terminal fitting, wherein a front wall of the cavity includes at least one resilient member which allows the at least partial insertion of the vehicle-side terminal into the cavity while being held in close contact with the vehicle-side terminal over the substantially entire circumference.

According to this construction, the resilient member comes substantially into close contact with the vehicle-side terminal over the substantially entire circumference when the vehicle-side terminal is connected to the terminal fitting. Thus, a foreign matter deposited on a surface of the vehicle-side terminal can be removed. Further, even if the charging connector is dropped by mistake, an impact at the time of a fall can be absorbed by the resilient member since the front wall of the cavity includes the resilient member. Thus, damage of the front wall of the cavity can be prevented in addition to restricting the entrance of a foreign matter into the cavity.

The present invention is preferably embodied to have the following constructions.

The front wall of the cavity may be integrally or unitarily formed to the terminal accommodating portion by co-molding or two-color molding.

According to this construction, the front wall of the cavity and the terminal accommodating portion can be formed at one time at least partly by co-molding or two-color molding. Thus, the front wall can be more easily formed as compared with the case where the front wall is formed as a separate member and is separately mounted on the terminal accommodating portion.

A contact portion with the vehicle-side terminal on the front wall of the cavity is formed to substantially extend in an inserting direction of the vehicle-side terminal.

According to this construction, the contact portion can be held in close surface contact with the vehicle-side terminal and the entrance of a foreign matter can be reliably restricted by an increase in a contact area.

The front wall of the cavity may include a cavity inner wall portion constituting an inner wall of the cavity, the resilient member arranged on the front side of the cavity inner wall portion and a holding member for holding the resilient member between the cavity inner wall portion and itself.

According to this construction, detachment of the resilient member due to insertion and withdrawal of the vehicle-side terminal can be restricted since the resilient member is arranged between the cavity inner wall portion and the holding member.

The holding member may be fixed by being press-fitted onto the cavity inner wall portion.

According to this construction, the construction of the holding member can be simplified since the holding member is fixed by being press-fitted on the cavity inner wall portion.

The holding member may be fixed by being threadably mounted on the cavity inner wall portion.

According to this construction, the holding member can be firmly mounted on the cavity inner wall portion since the holding member can be fixed by being threadably mounted.

The resilient member may comprise at least one guide surface for guiding the vehicle-side terminal by substantially sliding the leading end thereof along the guide surface.

The resilient member may comprise a contact surface for coming into contact with a portion of a vehicle-side cavity of the a vehicle-side connector.

The resilient member may comprise at least one guide surface to substantially come into sliding contact with a vehicle-side cavity of the a vehicle-side connector, whereby the terminal accommodating portion may be guided into the vehicle-side cavity.

The terminal fitting may comprise a contact piece being formed to have a substantially mountain shape whose peak is near the axial center of a main portion, and the position of the peak is arranged at a leading end portion of the main portion

The resilient member comprises an insertion hole, though which the vehicle-side terminal is to be at least partly inserted, may be formed to penetrate through a central part of the resilient member, wherein at least one sealing projection to be held substantially in close contact with the outer circumferential surface of the vehicle-side terminal over the entire circumference may be formed to substantially project radially inwardly at the insertion hole.

The present invention is further directed to a method of connecting a charging connector, in particular according to the invention or a preferred embodiment thereof, to a vehicle-side connector provided in a vehicle, comprising:
internally forming a terminal accommodating portion of the vehicle-side connector with at least one cavity;
at least partly accommodating a terminal fitting to be electrically conductively connected to a vehicle-side terminal in the cavity; and
providing a front wall of the cavity with at least one resilient member;
at least partial inserting a vehicle-side terminal of vehicle-side connector into the cavity thereby electrically connecting it to the terminal fitting while holding the at least one resilient member in close contact with the vehicle-side terminal over the substantially entire circumference.

The present invention may be preferably embodied as follows.

The front wall of the cavity may be integrally or unitarily formed to the terminal accommodating portion by co-molding or two-color molding.

A contact portion with the vehicle-side terminal on the front wall of the cavity may be formed to substantially extend in an inserting direction of the vehicle-side terminal.

The method may further comprise guiding the vehicle-side terminal by substantially sliding the leading end thereof along at least one guide surface of the resilient member.

According to the above, it is possible to prevent a foreign matter from entering a cavity and prevent a front wall of the cavity from being damaged.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a section showing a state before a vehicle-side connector and a charging connector are connected in a first embodiment with a resilient member and its surroundings enlargedly shown,
FIG. 2 is a section showing a state where the vehicle-side connector and the charging connector are connected with the resilient member and its surroundings enlargedly shown,
FIG. 3 is a partial enlarged section enlargedly showing a resilient member and its surroundings in a second embodiment,
FIG. 4 is a partial enlarged section enlargedly showing a seal ring and its surroundings in a third embodiment, and
FIG. 5 is a partial enlarged section enlargedly showing a seal ring and its surroundings in a fourth embodiment.

### <First Embodiment>

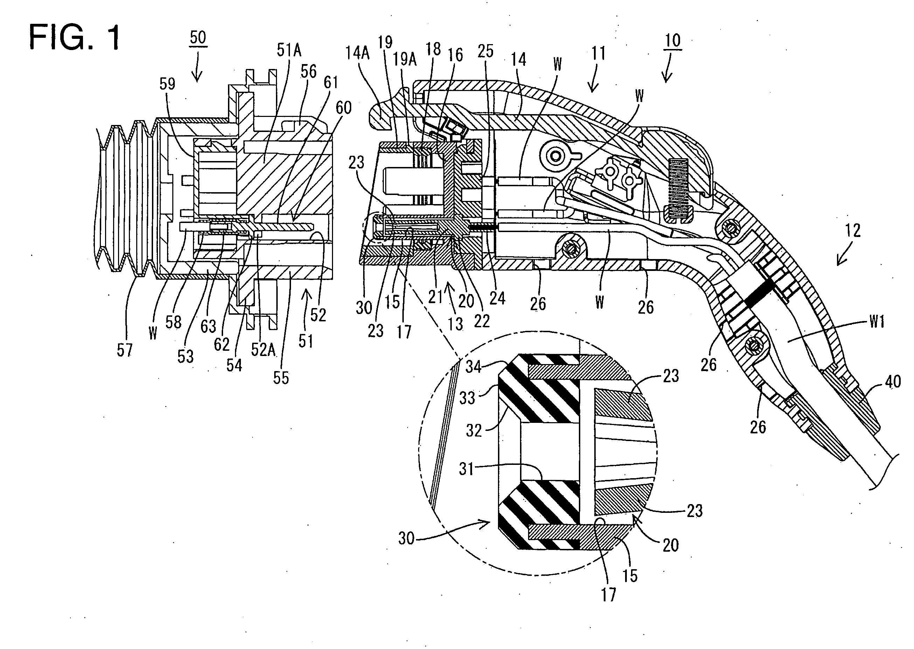

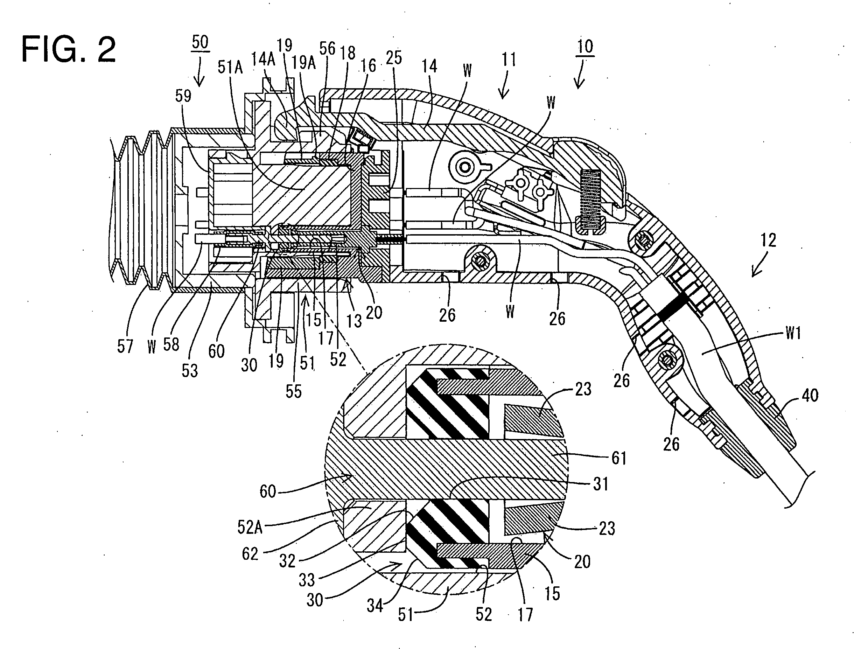

A first particular embodiment of the present invention is described with reference to FIGS. 1 and 2. A charging connector 10 of this embodiment particularly is connectable with a vehicle-side connector 50. It should be noted that in the following a front side or a forward direction is referred to a connection direction of the charging connector 10 with the vehicle-side connector 50. The charging connector 10 substantially is gun-shaped as a whole and formed with a connector main body 11 constituting a front portion (particularly substantially a front half) and a grip 12 extending obliquely downward from a rear portion of this connector main body 11 as shown in FIG. 1. The connector main body 11 and the grip 12 particularly are both made of synthetic resin and/or integrally or unitarily molded. A (particularly substantially cylindrical) receptacle 13 substantially projecting forward is provided on the front surface of the connector main body 11. Further, a lever 14 is on or to the connector main body 11 (particularly at least partly accommodated at an upper side of the interior of the connector main body 11), and a distal or front end portion thereof is exposed to the outside from the connector main body 11 (particularly from the front edge of the upper surface of the connector main body 11).

The receptacle 13 particularly is formed as a separate member from the connector main body 11, and fixed or mounted to the connector main body 11 by an unillustrated locking means as shown in FIG. 1. One or more, particularly a plurality of cylindrical terminal accommodating portions 15 are provided in the receptacle 13. These one or more terminal accommodating portions 15 substantially project forward from a back wall 16 of the receptacle 13 and are not exposed to the outside from the opening edge of the receptacle 13. Thus, even if the charging connector 10 is dropped by mistake, the terminal accommodating portions 15 do not directly hit the ground, whereby the terminal accommodating portions 15 can be protected by the receptacle 13.

One or more cavities 17 for at least partly accommodating one or more terminal fittings 20 are formed in the terminal accommodating portion(s) 15. The cavities 17 are open at the rear surface of the back wall 16 of the receptacle 13.

A cylindrical rubber ring 18 (as a preferred resilient ring) is mounted along the inner circumferential surface of the receptacle 13 in the receptacle 13, and a holder 19 for retaining the rubber ring 18 is mounted before the rubber ring 18. The holder 19 particularly has the substantially same cylindrical shape as the rubber ring 18 and includes at least one locking portion 19A engageable with an inner side of the receptacle 13. The holder 19 is to be substantially mounted along the inner circumferential surface of the receptacle 13 by this locking portion 19A.

A mounting portion for the holder 19 on the inner circumferential surface of the receptacle 13 particularly has a larger diameter than the back side of the holder 19. By mounting the holder 19, the inner circumferential surface of the holder 19 and the inner circumferential surface of the receptacle 13 substantially behind the rubber ring 18 particularly are substantially aligned to be substantially flush. One or more lip portions of the rubber ring 18 substantially project radially inwardly of the inner circumferential surface of the holder 19. On the other hand, the vehicle-side connector 50 includes a vehicle-side housing 51 connectable to the charging connector 10. The vehicle-side housing 51 particularly is made of synthetic resin and includes a housing main body 51 A at least partly fittable into the receptacle 13 as shown in FIG. 2. Thus, when the housing main body 51A is at least partly fitted or inserted into the receptacle 13, the outer circumferential surface thereof comes into close contact with the one or more lip portions of the rubber ring 18, thereby providing waterproofing or sealing between the two connectors 10 and 50.

One or more vehicle-side cavities 52 for at least partly accommodating one or more corresponding vehicle-side terminals 60 are formed in the housing main body 51 A. The vehicle-side housing 51 is to be mounted in or to a mounting opening portion 53 formed in a vehicle body. A mounting plate 54 is formed to project from the outer periphery of the vehicle-side housing 51, and the vehicle-side housing 51 is to be mounted and fixed to the mounting opening portion 53 by placing this mounting plate 54 substantially along the opening edge of the mounting opening portion 53 and fixing (particularly bolting) it.

A fitting tube portion 55 is circumferentially provided around the outer circumferential surface of the housing main body 51A. This fitting tube portion 55 projects substantially forward from the mounting plate 54, so that the receptacle 13 is at least partly fittable between the housing main body 51 A and the fitting tube portion 55. A lock projection 56 is provided on (particularly the upper surface of) the fitting tube portion 55. This lock projection 56 is engageable (particularly substantially in a connecting direction) with a lever-side projection 14A projecting from (particularly the lower surface of the leading end of) the lever 14. Accordingly, when the two connectors 10, 50 are connected, the lever-side projection 14A is engaged with the lock projection 56, whereby the two connectors 10, 50 are held in a connected state. Note that a bellows-like grommet 57 substantially extending backward is mounted on (particularly a rear part of) the mounting opening portion 53.

Each vehicle-side terminal 60 particularly has a pin-shaped male-side main portion 61, and a male-side flange portion 62 is so circumferentially provided as to project from the outer circumferential surface of this male-side main portion 61. The male-side flange portion 62 substantially is in contact with (particularly a rear wall 52A of) the vehicle-side cavity 52 (particularly substantially from behind), and the male-side main portion 61 is at least partly accommodated into the vehicle-side cavity 52 particularly through this rear wall 52A. Note that the terminal accommodating portions 15 of the charging connector 10 can be at least partly accommodated into the vehicle-side cavities 52.

A wire connection portion (particularly comprising a substantially cylindrical or tubular male-side barrel portion 63) is formed at or near a rear end portion of the male-side main portion 61, and a core of a wire W is to be connected with the wire connection portion particularly by being placed in this male-side barrel portion 63 and fixed by crimping or bending or folding or deforming. Further, a heat shrinkable tube 58 particularly is so mounted as to at least partly cover the wire connection portion, particularly a crimping part of the male-side barrel portion 63. The crimping part of the male-side barrel portion 63 is protected from water by this heat shrinkable tube 58. A vehicle-side retainer 59 for preventing the vehicle-side terminals 60 from coming out backward by being engaged with the male-side flange portions 62 of the vehicle-side terminals 60 (particularly substantially from behind) is mounted in or on a rear part of the vehicle-side housing 51.

Next, a surrounding structure of the terminal fitting 20 of the charging connector 10 is described. The terminal fitting 20 particularly includes a female-side main portion 21 with one or more, particularly a plurality of contact pieces 23. The plurality of contact pieces 23 particularly are formed by forming a plurality of slits intermittently in a circumferential direction. The slits are formed to substantially extend backward from the front end opening edge of the terminal main body 21 having an open front end. The terminal of this type is called a slotted terminal or the like in some cases.

Each contact piece 23 of the terminal fitting 20 is so formed as to moderately approach an axial center from a base end portion toward a leading end portion and then move away from the axial center at the leading end portion in a natural state before connection with the vehicle-side terminal 60. In other words, the contact piece 23 is formed to have a substantially mountain shape whose peak is near the axial center of the female-side main portion 21, and the position of the peak is arranged at a leading end portion of the female-side main portion 21. That is, a contact portion of the terminal fitting 20 is formed by the peaks of the plurality of contact pieces 23, and an inner diameter in this contact portion particularly is set to be smaller than an outer diameter of the male-side main portion 61 of the vehicle-side terminal 60. Thus, when the vehicle-side terminal 60 is at least partly fitted into the terminal fitting 20, the male-side main portion 61 of the vehicle-side terminal 60 and the respective contact pieces 23 substantially slide at the contact portion and the vehicle-side terminal 60 and the terminal fitting 20 are electrically conductively connected with the respective contact pieces 23 resiliently deformed substantially radially outwardly.

A female-side flange portion 22 is circumferentially provided on or at (particularly a rear side of the outer circumferential surface of) the female-side main portion 21. This female-side flange portion 22 can come substantially into contact with the rear end opening edge of the cavity 17 and the terminal fitting 20 is prevented from moving any further (particularly substantially forward) by this contact. On the other hand, a back retainer 25 for preventing the terminal fittings 20 from being withdrawn (particularly substantially backward) by being engaged with the female-side flange portions 22 of the terminal fittings 20 (from behind) is mounted in a rear part of the receptacle 13. In other words, substantially longitudinal or forward and backward movements of the terminal fittings 20 are prevented since the female-side flange portions 22 are held between the rear end opening edges of the cavities 17 and the back retainer 25.

A wire connection portion (particularly comprising a barrel portion 24) to be connected (particularly fixed) to the core exposed at an end of the wire W is formed behind the female-side main portion 21. This barrel portion 24 substantially projects backward through an insertion hole formed to penetrate through the back retainer 25. The barrel portion 24 particularly has a cylindrical shape and has an open rear end, and is electrically conductively connected to the wire W by being crimped or bent or folded or deformed with the core of the wire W at least partly accommodated inside. The wire W substantially extends backward from the barrel portion 24 and is drawn out to the outside through the interiors of the connector main body 11 and/or the grip 12.

In the connector main body 11, one or more, particularly a plurality of wires W substantially extend backward in correspondence with the one or more, particularly plurality of terminal fittings 20, and these wires W particularly are bundled into one cable W1 by being covered by an outer sheath in the grip 12. The cable W1 is fixed by a cable grip ring (not shown) or the like in the grip 12 and further fixed by a bush 40 at or near (particularly a rear end portion of) the grip 12. Since the bush 40 is held substantially in close contact with the inner circumferential surface of the rear end opening of the grip 12 and the outer circumferential surface of the cable W1, water is prevented from entering the interior of the grip 12 through the rear end of the grip 12. Since one or more, particularly a plurality of water drain holes 26 are formed in or near the lower surfaces of the connector main body 11 and the grip 12, water can be allowed to escape to the outside through these water drain holes 26 even if it enters the interiors of the connector main body 11 and the grip 12.

A front wall of the (particularly each) cavity 17 is formed or defined by or comprises a resilient member 30 as shown in enlarged sections of FIGS. 1 and 2. The resilient member 30 is integrally formed to the terminal accommodating portion 15 particularly by co-molding or two-color molding. In other words, the resilient member 30 particularly constitutes a part of the terminal accommodating portion 15. An insertion hole 31, though which the male-side main portion 61 of the vehicle-side terminal 60 is to be at least partly inserted, is formed to penetrate through a central or intermediate part of the resilient member 30. An inner circumferential surface forming the insertion hole 31 is to be held substantially in close contact with the outer circumferential surface of the male-side main portion 61 over at least part, particularly over the substantially entire circumference. In other words, the inner circumferential surface forming the insertion hole 31 substantially extends in an inserting direction of the male-side main portion 61 and particularly is substantially entirely held in close surface contact with the outer circumferential surface of the male-side main portion 61.

Since a front end opening edge portion of the insertion hole 31 particularly is formed into a conical or converging guide surface 32, the male-side main portion 61 can be guided into the insertion hole 31 by substantially sliding the leading end thereof along the guide surface 32 even if an axial center of the male-side main portion 61 and that of the insertion hole 31 are displaced e.g. due to a molding error of the resilient member 30 or another reason.

A contact surface 33 which comes into contact with the rear wall 52A of the vehicle-side cavity 52 is formed at a side of the resilient member 30 radially outward of the guide surface 32. This contact surface 33 particularly comes into contact with the rear wall 52A of the vehicle-side cavity 52 from front. Further, with the contact surface 33 held in contact with the rear wall 52A of the vehicle-side cavity 52, shaking of the two connectors 10, 50 in the connected state can be suppressed and an impact produced when the two connectors 10, 50 are connected can be absorbed. Note that the front end of the female-side main portion 21 and the resilient member 30 are arranged to substantially face each other while being spaced apart by a specified (predetermined or predeterminable) distance with the terminal fitting 20 at least partly accommodated in the cavity 17.

A side of the resilient member 30 radially outward of the contact surface 33 particularly has a corner portion cut off, whereby an inclined or rounded guide surface 34 is at least partly circumferentially formed. This guide surface 34 guides the terminal accommodating portion 15 when the terminal accommodating portion 15 is at least partly inserted into the vehicle-side cavity 52. In other words, the at least one guide surface 34 substantially slides in contact with the front end opening edge portion of the vehicle-side cavity 52, whereby the terminal accommodating portion 15 is guided into the vehicle-side cavity 52.

According to this construction, as the two connectors 10, 50 are connected, the male-side main portions 61 are at least partly inserted into the insertion holes 31 of the resilient member 30. At this time, the outer circumferential surfaces of the male-side main portions 61 substantially slide in contact with the inner circumferential surfaces of the insertion holes 31, whereby foreign matters such as muddy water deposited on surfaces of the male-side main portions 61 are removed or hindered to prevent the foreign matters from entering the cavities 17. The foreign matters removed or hindered by the resilient members 30 particularly are or can be temporarily accumulated between the guide surfaces 32 and/or the rear walls 52A of the vehicle-side cavities 52. However, as the two connectors 10, 50 are separated, the guide surfaces 32 and the rear walls 52A of the vehicle-side cavities 52 are relatively separated and the foreign matters fall down, thereby being discharged to the outside of the two connectors 10, 50.

Even if the charging connector 10 is dropped by mistake and a protruding object collides with the resilient member 30, an impact can be absorbed by the resilient member 30, wherefore damage of the terminal accommodating portion 15 can be restricted. Further, since the resilient member 30 and the terminal accommodating portion 15 are integrally or unitarily formed particularly by co-molding or two-color molding, the front wall of the cavity 17 can be more easily formed as compared with the case where the resilient member 30 and the terminal accommodating portion 15 are formed as separate members and the resilient member 30 is separately mounted.

Accordingly, to prevent a foreign matter from entering a cavity and prevent a front wall of the cavity from being damaged, a charging connector 10 connectable to a vehicle-side connector 50 provided in a vehicleis provided with one or more terminal fittings 20 to be electrically conductively connected to one or more respective vehicle-side terminals 60 provided in the vehicle-side connector 50, and one or more terminal accommodating portions 15 internally formed with one or more cavities 17 for at least partly accommodating the respective terminal fittings 20. A front wall of each cavity 17 includes a resilient member 30 which allows the insertion of the vehicle-side terminal 60 into the cavity 17 while being held substantially in close contact with the vehicle-side terminal 60 over at least part of the circumference, particularly over the substantially entire circumference.

### <Second Embodiment>

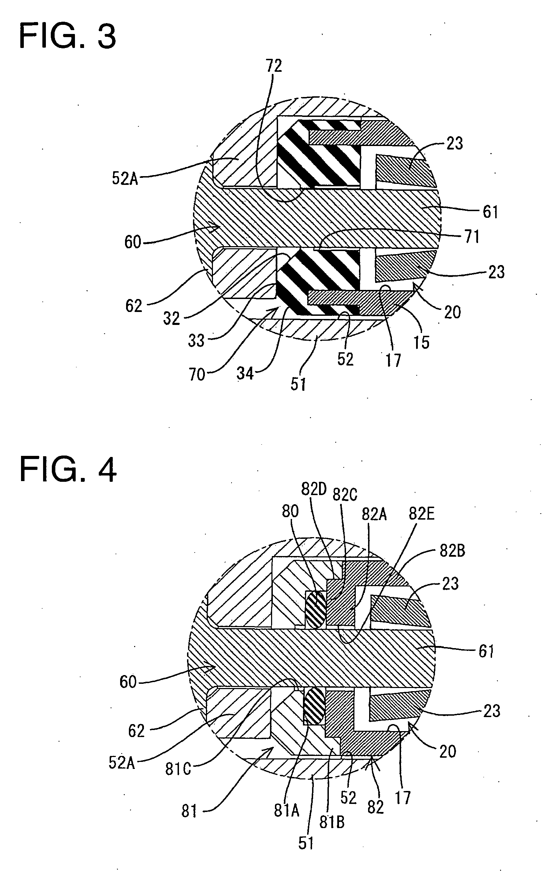

Next, a second particular embodiment of the present invention is described with reference to FIG. 3. The second embodiment is obtained by partly changing the construction of the front wall of the cavity 17 in the first embodiment and the other constructions, functions and effects thereof are not described since being similar or substantially same. Further, the similar or substantially same constructions as in the first embodiment are identified by the same reference numerals. A front wall of a cavity 17 in this embodiment is formed by or comprises a resilient member 70 as shown in FIG. 3. The resilient member 70 is integrally or unitarily formed to a terminal accommodating portion 15 particularly co-molding or by two-color molding as in the first embodiment and constitutes or forms a part of the terminal accommodating portion 15.

An insertion hole 71, though which a male-side main portion 61 of a vehicle-side terminal 60 is to be at least partly inserted, is formed to penetrate through a central part of the resilient member 70. At least one (particularly substantially ring-shaped) sealing projection 72 to be held substantially in close contact with the outer circumferential surface of the male-side main portion 61 over the entire circumference is formed to project radially inwardly at the front end of the inner circumferential surface of the insertion hole 71. This (particularly ring-shaped) sealing projection 72 is held in close contact with the outer circumferential surface of the male-side main portion 61.

In this embodiment, the inner circumferential surface of the insertion hole 31 particularly is not in surface contact with the male-side main portion 61 as in the first embodiment and the sealing projection 72 substantially is in line contact with the male-side main portion 61 at a part of the inner circumferential surface of the insertion hole 71. Thus, a frictional force resulting from sliding contact of the male-side main portion 61 and the sealing projection 72 decreases, wherefore insertion resistance at the time of inserting the male-side main portion 61 into the insertion hole 71 decreases.

### <Third Embodiment>

Next, a third particular embodiment of the present invention is described with reference to FIG. 4. The third embodiment is obtained by partly changing the construction of the front wall of the cavity 17 in the first embodiment and, accordingly, the construction of the terminal accommodating portion 15 is also partly changed. The other constructions, functions and effects thereof are not described since being similar or substantially same. Further, the similar or substantially same constructions as in the first embodiment are identified by the same reference numerals.

A terminal accommodating portion 82 in this embodiment includes a front wall portion 82A constituting or forming part of a front wall of an inner wall of a cavity 17 and a side wall portion 82B constituting or forming part of a side wall of the inner wall of the cavity 17. These front wall portion 82A and side wall portion 82B particularly are integrally or unitarily formed. Further, in this embodiment, a substantially ring-shaped seal ring 80 is sandwiched or arranged between the front wall portion 82A and a holding cap 81 mounted on or to (particularly the front surface of) the front wall portion 82A. In other words, a front wall of the cavity 17 in this embodiment includes the front wall portion 82A, the seal ring 80 and the holding cap 81.

A base portion 82C for receiving the seal ring 80 is formed to project from a surface of the front wall portion 82A facing the holding cap 81. The base portion 82C particularly has a smaller diameter than the side wall portion 82B, and a stepped portion 82D is formed between the front surface of the base portion 82C and the outer side surface of the side wall portion 82B. An insertion hole 82E, through which a male-side main portion 61 of a vehicle-side terminal 60 is to be at least partly inserted, is formed to penetrate through a central or intermediate part of the front wall portion 82A.

The holding cap 81 is made e.g. of synthetic resin and an accommodating recess 81 A for at least partly accommodating the seal ring 80 is formed in a surface of the holding cap 81 substantially facing the base portion 82C. An outer peripheral flange portion 81 to be inserted (particularly substantially press-fitted) into the stepped portion 82D is circumferentially provided on a surface of the holding cap 81 substantially facing the stepped portion 82D. Further, an insertion hole 81 C, through which the male-side main portion 61 is to be at least partly inserted, is formed to penetrate through a central or intermediate part of the holding cap 81. When the outer peripheral flange portion 81B is inserted (particularly substantially press-fitted) into the stepped portion 82D, the seal ring 80 is sandwiched or arranged between the accommodating recess 81 A and the base portion 82C. Thus, the seal ring 80 is resiliently radially deformed by being compressed (particularly substantially from front and/or back sides) and the inner circumferential surface of the seal ring 80 comes to have a smaller diameter to be held in close contact with the outer circumferential surface of the male-side main portion 61.

According to this construction, the construction of the holding cap 81 can be simplified since the holding cap 81 can be fixed particularly by being press-fitted. Further, the seal ring 80 is not detached by insertion and withdrawal of the male-side main portion 61 since the seal ring 80 particularly is sandwiched between the accommodating recess 81A and the base portion 82C. Furthermore, even if a charging connector is dropped by mistake and the terminal accommodating portion 82 collides with a protruding object, an impact at the time of a fall can be absorbed by the seal ring 80 constituting the front wall of the cavity 17 and damage of the terminal accommodating portion 82 can be prevented.

For example, depending on a combination of the material of the seal ring 80 and that of the terminal accommodating portion 82, adhesion of these materials may be difficult at the time of molding and it may not be possible to perform two-color molding. In this embodiment, even in such a case, the front wall of the cavity 17 including a resilient member can be formed regardless of a combination of materials since the seal ring 80 is physically sandwiched using the holding cap 81.

### <Fourth Embodiment>

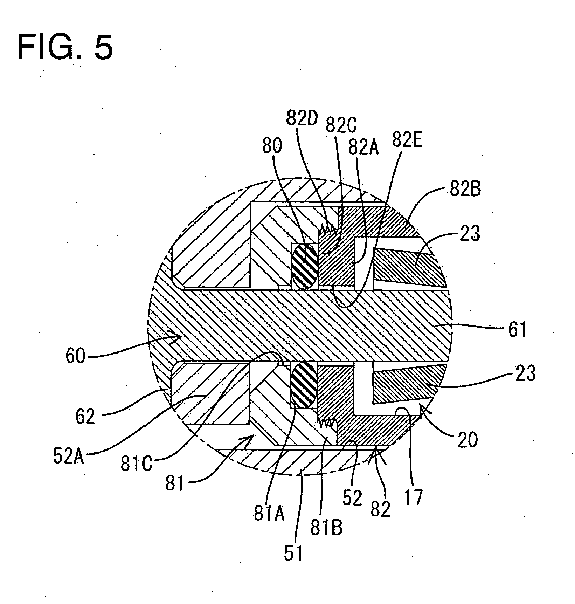

Next, a fourth particular embodiment of the present invention is described with reference to FIG. 5. The fourth embodiment is obtained by partly changing a method for fixing the holding cap 81 and the front wall portion 82A in the third embodiment and the other constructions, functions and effects thereof are not described since being similar or substantially same. Further, the similar or substantially same constructions as in the third embodiment are identified by the same reference numerals.

An internal thread is formed in the inner circumferential surface of an outer peripheral flange portion 81 B, an external thread is formed on the outer circumferential surface of a base portion 82C, and a holding cap 81 is threadably mounted on or to a front wall portion 82A by fitting the base portion 82C into the inner side of the outer peripheral flange portion 81B and tightening the holding cap 81. Therefore, the holding cap 81 can be firmly mounted on the front wall portion 82A.

### <Other Embodiments>

The present invention is not limited to the above described and illustrated embodiments. For example, the following embodiments are also included in the technical scope of the present invention.
(1) Although the insertion hole is formed in the resilient member in the above embodiments, the vehicle-side terminal may be pierced through the resilient member (e.g. formed of a gelatinous or elastic material) without forming any insertion hole according to the present invention. The gelatinous or elastic material may be a gel or elastic or rubbery material containing three dimensional cross-linked molecular formations or behave as if it contained such molecular formations (geloids). One example of a gel that can be used is silicone gel or resin. Another suitable gel comprises a block copolymer having relatively hard blocks (e.g. hydrogenated rubber blocks) examples of such copolymers including styrene-diene block copolymers (linear or radial) for example styrene-butadiene or styrene-isoprene diblock or triblock copolymers, or styrene-ethylene-butylene-styrenes triblock copolymers. The gel may be formed from a single liquid material which becomes a gel when subjected e.g. to radiation or chemicals; the gel may be formed from two components which become a gel when mixed; or the gel may be a composition which is a gel at working temperature, e.g. room temperature. Additionally or alternatively a gel material as disclosed in US-A-4 875 870 may be used, which is included herein by reference.
(2) Although the resilient member 30 is integrally formed to the terminal accommodating portion 15 by two-color molding in the first and second embodiments, it may be fixed to the terminal accommodating portion 15 by an adhesive according to the present invention.
(3) Although the holding cap is fixed by press-fitting and threadable engagement in the third and fourth embodiments, it may be fixed using a locking structure with a claw engagement according to the present invention.
(4) Although the seal ring 80 is resiliently deformed by being sandwiched between the accommodating recess 81 A and the base portion 82C in the third and fourth embodiments, it may be so arranged between the accommodating recess 81 A and the base portion 82C as not to be resiliently deformed according to the present invention.

### LIST OF REFERENCE NUMERALS

- 10: charging connector
- 15: terminal accommodating portion
- 17: cavity
- 20: erminal fitting
- 30: resilient member
- 31: insertion hole (contact portion)
- 50: vehicle-side connector
- 60: vehicle-side terminal
- 70: resilient member
- 80: seal ring (resilient member)
- 81: holding cap
- 82: terminal accommodating portion
- 82A: front wall portion (cavity inner wall portion)

## Claims

1. A charging connector (10) connectable to a vehicle-side connector (50) provided in a vehicle, comprising:
a terminal fitting (20) to be electrically conductively connected to a vehicle-side terminal (60) provided in the vehicle-side connector; and
a terminal accommodating portion (15) internally formed with at least one cavity (17) for at least partly accommodating the terminal fitting (20),
wherein a front wall of the cavity (17) includes at least one resilient member (30; 70; 80) which allows the at least partial insertion of the vehicle-side terminal (60) into the cavity (17) while being held in close contact with the vehicle-side terminal (60) over the substantially entire circumference.

2. A charging connector according to claim 1, wherein the front wall of the cavity (17) is integrally or unitarily formed to the terminal accommodating portion (15) by co-molding or two-color molding.

3. A charging connector according to any one of the preceding claims, wherein a contact portion (31) with the vehicle-side terminal (60) on the front wall of the cavity (17) is formed to substantially extend in an inserting direction of the vehicle-side terminal (60).

4. A charging connector according to any one of the preceding claims, wherein the front wall of the cavity (17) includes a cavity inner wall portion (82A) constituting an inner wall of the cavity (17), the resilient member arranged on the front side of the cavity inner wall portion (82A) and a holding member (81) for holding the resilient member (80) between the cavity inner wall portion (82A) and itself (81).

5. A charging connector according to claim 4, wherein the holding member (81) is fixed by being press-fitted onto the cavity inner wall portion (82A).

6. A charging connector according to claim 4 or 5, wherein the holding member (81) is fixed by being threadably mounted on the cavity inner wall portion (82A).

7. A charging connector according to any one of the preceding claims, wherein the resilient member (30; 70; 80) comprises at least one guide surface (32) for guiding the vehicle-side terminal (60) by substantially sliding the leading end thereof along the guide surface (32).

8. A charging connector according to any one of the preceding claims, wherein the resilient member (30; 70; 80) comprises a contact surface (33) for coming into contact with a portion (52A) of a vehicle-side cavity (52) of the a vehicle-side connector (50).

9. A charging connector according to any one of the preceding claims, wherein the resilient member (30; 70; 80) comprises at least one guide surface (34) to substantially come into sliding contact with a vehicle-side cavity (52) of the a vehicle-side connector (50), whereby the terminal accommodating portion (15) is guided into the vehicle-side cavity (52).

10. A charging connector according to any one of the preceding claims, wherein the terminal fitting (20) comprises a contact piece (23) being formed to have a substantially mountain shape whose peak is near the axial center of a main portion (21), and the position of the peak is arranged at a leading end portion of the main portion (21)

11. A charging connector according to any one of the preceding claims, wherein the resilient member (70) comprises an insertion hole (71), though which the vehicle-side terminal (60) is to be at least partly inserted, which is formed to penetrate through a central part of the resilient member (70), wherein at least one sealing projection (72) to be held substantially in close contact with the outer circumferential surface of the vehicle-side terminal (60) over the entire circumference is formed to substantially project radially inwardly at the insertion hole (71).

12. A method of connecting a charging connector (10) to a vehicle-side connector (50) provided in a vehicle, comprising:
internally forming a terminal accommodating portion (15) of the vehicle-side connector with at least one cavity (17);
at least partly accommodating a terminal fitting (20) to be electrically conductively connected to a vehicle-side terminal (60) in the cavity (17); and
providing a front wall of the cavity (17) with at least one resilient member (30; 70; 80);
at least partial inserting a vehicle-side terminal (60) of vehicle-side connector (50) into the cavity (17) thereby electrically connecting it to the terminal fitting (20) while holding the at least one resilient member (30; 70; 80) in close contact with the vehicle-side terminal (60) over the substantially entire circumference.

13. A method according to claim 12, wherein the front wall of the cavity (17) is integrally or unitarily formed to the terminal accommodating portion (15) by co-molding or two-color molding.

14. A method according to claim 12 or 13, wherein a contact portion (31) with the vehicle-side terminal (60) on the front wall of the cavity (17) is formed to substantially extend in an inserting direction of the vehicle-side terminal (60).

15. A method according to any one of the preceding claims 12 to 14, further comprising guiding the vehicle-side terminal (60) by substantially sliding the leading end thereof along at least one guide surface (32) of the resilient member (30; 70; 80).
